# EUROPEAN PATENT APPLICATION

(11) **EP 4 586 470 A1**
(43) Date of publication of application: **16.07.2025**
(21) Application number: 24216567.8
(22) Date of filing: 29.11.2024
(51) Int. Cl.: H02K 5/20, H02K 5/22, H02K 9/19

(54) **METHOD AND APPARATUS TO PASSIVELY COOL HIGH-POWER PHASE CONNECTIONS ON A FLUID COOLED ELECTRIC MACHINE**

(30) Priority: 11.01.2024 US 202418410025
(71) Applicant: Schaeffler Technologies AG & Co. KG, 91074 Herzogenaurach (DE); Deere & Company, Moline, IL 61265 (US)
(72) Inventor: SILVERY, Christian, 77815 Bühl (DE); GEISER, Matthias, 77815 Bühl (DE); REEK, Christopher, North Fargo, 58102 (US)
(74) Representative: Marks & Clerk LLP

(57) **Abstract**

An electric machine includes a housing or housing cover and a distribution member supported by the housing or housing cover. The distribution member has a fluid inlet and a fluid outlet. A high-voltage terminal is supported by the housing or housing cover. One or more busbars are associated with the high-voltage terminal. One or more guides are formed within the high-voltage terminal to direct fluid from the fluid outlet to the one or more busbars.

## Description

### TECHNICAL FIELD

This disclosure relates generally to an electric machine for a heavy-duty application and, more particularly, to an electric machine where fluid is guided from a nozzle distribution ring to cool busbars associated with a high-voltage terminal.

### BACKGROUND

An electric machine in an electric drive, such as a hybrid module, e-axle, or powered wheel hub for example, includes a high-voltage terminal with associated busbars. The high-voltage terminal is used to establish the electrical connection from the winding of the electrical machine to associated power electronics. Because the electric machine experiences high currents and voltages in heavy-duty applications, the busbars associated with the high-voltage terminal can become increasingly heated. The high-voltage terminal and associated busbars are located at a position that is challenging to cool.

### SUMMARY

An electric machine according to an exemplary aspect of the present disclosure includes, among other things: a housing or housing cover; a distribution member supported by the housing or housing cover, the distribution member having a fluid inlet and a fluid outlet; a high-voltage terminal supported by the housing or housing cover; one or more busbars associated with the high-voltage terminal; and one or more guides formed within the high-voltage terminal to direct fluid from the fluid outlet to the one or more busbars.

In a further non-limiting embodiment of the foregoing electric machine, the one or more busbars comprises a plurality of bus bars, and the one or more guides comprises a plurality of windows.

In a further non-limiting embodiment of any of the foregoing electric machines, each busbar is associated with one or more windows of the plurality of windows.

In a further non-limiting embodiment of any of the foregoing electric machines, the high-voltage terminal includes a discrete mounting pocket for each busbar.

In a further non-limiting embodiment of any of the foregoing electric machines, each guide includes an inclined surface that directs fluid onto an associated busbar.

In a further non-limiting embodiment of any of the foregoing electric machines, the distribution member comprises one or more guide paths to direct fluid to the fluid outlet.

In a further non-limiting embodiment of any of the foregoing electric machines, the high-voltage terminal comprises an arcuate body that is associated with a lowermost portion of the distribution member.

In a further non-limiting embodiment of any of the foregoing electric machines, the high-voltage terminal is comprised of a plastic material and the one or more busbars are comprised of a metal material.

An electric machine according to an exemplary aspect of the present disclosure includes, among other things: a housing or housing cover defining an internal cavity; a stator and a rotor positioned within the internal cavity; a distribution member supported by the housing or housing cover, the distribution member having a fluid inlet and a fluid outlet, wherein fluid flows from the fluid inlet to the fluid to cool windings associated with the stator and the rotor; a high-voltage terminal supported by the housing or housing cover; a plurality of busbars associated with the high-voltage terminal; and a plurality of guides formed within the high-voltage terminal to direct fluid from the fluid outlet to the plurality of busbars.

In a further non-limiting embodiment of any of the foregoing electric machines, the plurality of guides comprises at least one window that is associated with each busbar.

In a further non-limiting embodiment of any of the foregoing electric machines, the plurality of guides comprises more than one window that is associated with each busbar.

In a further non-limiting embodiment of any of the foregoing electric machines, each guide comprises an inclined surface that directs fluid onto an associated busbar.

In a further non-limiting embodiment of any of the foregoing electric machines, the distribution member comprises one or more guide paths to direct fluid to the fluid outlet.

In a further non-limiting embodiment of any of the foregoing electric machines, the high-voltage terminal comprises an arcuate body that is associated with a lowermost portion of the distribution member.

In a further non-limiting embodiment of any of the foregoing electric machines, each busbar has a first end fixed to the high-voltage terminal and a second end that comprises a phase busbar attachment.

In a further non-limiting embodiment of any of the foregoing electric machines, each second end extends out radially relative to a center axis defined by the rotor.

In a further non-limiting embodiment of any of the foregoing electric machines, each second end extends in a direction that is parallel relative to a center axis defined by the rotor.

A method according to another exemplary aspect of the present disclosure includes, among other things: distributing a fluid through an electric machine housing or housing cover from a fluid inlet to a fluid outlet; directing fluid exiting the fluid outlet toward a high-voltage terminal supported by the electric machine housing; and guiding the fluid through the high-voltage terminal to cool one or more busbars associated with the high-voltage terminal.

In a further non-limiting embodiment of the foregoing method, the method further includes forming one or more windows in the high-voltage terminal to direct fluid from the fluid outlet to the one or more busbars.

In a further non-limiting embodiment of any of the foregoing methods, the method further includes associating at least one window with each busbar and directing fluid through each window to cool an associated busbar.

The embodiments, examples and alternatives of the preceding paragraphs, the claims, or the following description and drawings, including any of their various aspects or respective individual features, may be taken independently or in any combination. Features described in connection with one embodiment are applicable to all embodiments, unless such features are incompatible.

### BRIEF DESCRIPTION OF THE FIGURES

The various features and advantages of the disclosed examples will become apparent to those skilled in the art from the detailed description. The figures that accompany the detailed description can be briefly described as follows:
Figure 1 illustrates a perspective view of one side of an electric machine according to the subject disclosure.
Figure 2 is similar to Figure 1 but shows an opposite side of the electric machine.
Figure 3 is an end view of an electric machine showing an example fluid flow path through an electric machine housing to a high-voltage terminal with busbars.
Figure 4 is similar to Figure 3 but shows one portion of the electric machine housing removed to show a fluid distribution member.
Figure 5 is a section view of a portion of an electric machine, according to the disclosure, which shows a cooling flow path exiting the fluid distribution member, flowing through the high-voltage terminal, and cooling the busbars.
Figure 6A is a perspective view of one example of a high-voltage terminal having axially extending busbars.
Figure 6B is an enlarged view of a portion of the high-voltage terminal of Figure 6A showing one busbar connection to the high-voltage terminal.
Figure 7A is a side view of the high-voltage terminal of Figure 6A.
Figure 7B is an enlarged view of a portion of the high-voltage terminal of Figure 7A showing one busbar connection to the high-voltage terminal.
Figure 7C is a section view as identified in Figure 7B.
Figure 8 is perspective view of a portion of an end of an electric machine with the high-voltage terminal according to Figure 7A.
Figure 9A is a section view of the electric machine of Figure 8.
Figure 9B is an enlarged view of a portion of the electric machine as shown in Figure 9A.
Figure 10A is a side view of an example of a high-voltage terminal that has radially extending busbars.
Figure 10B is an enlarged view of a portion of the high-voltage terminal of Figure 10A showing one busbar connection to the high-voltage terminal.
Figure 10C is a section view as identified in Figure 10B.

### DETAILED DESCRIPTION

This disclosure details an electric machine for a heavy-duty application and, more particularly, to an electric machine where fluid is guided from a nozzle distribution ring to cool busbars associated with a high-voltage terminal.

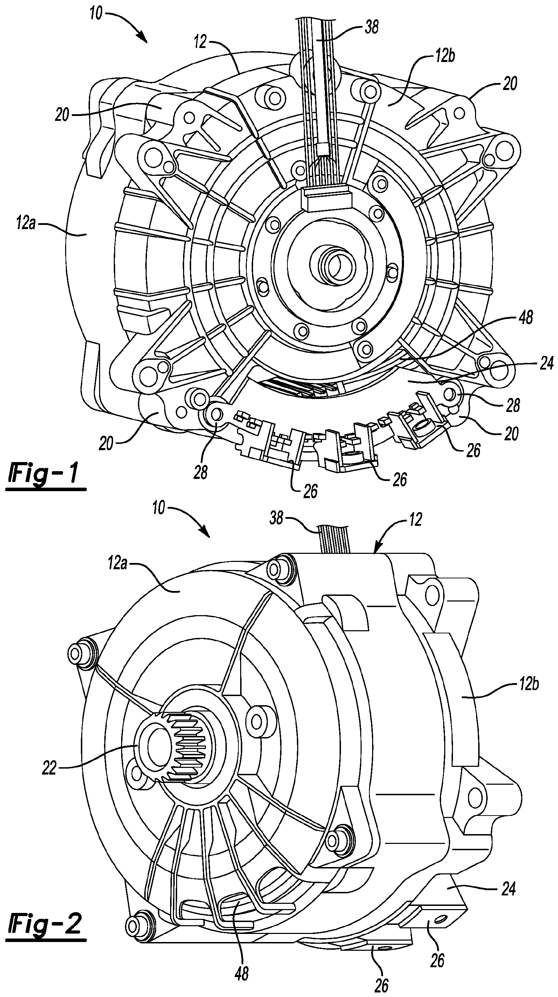

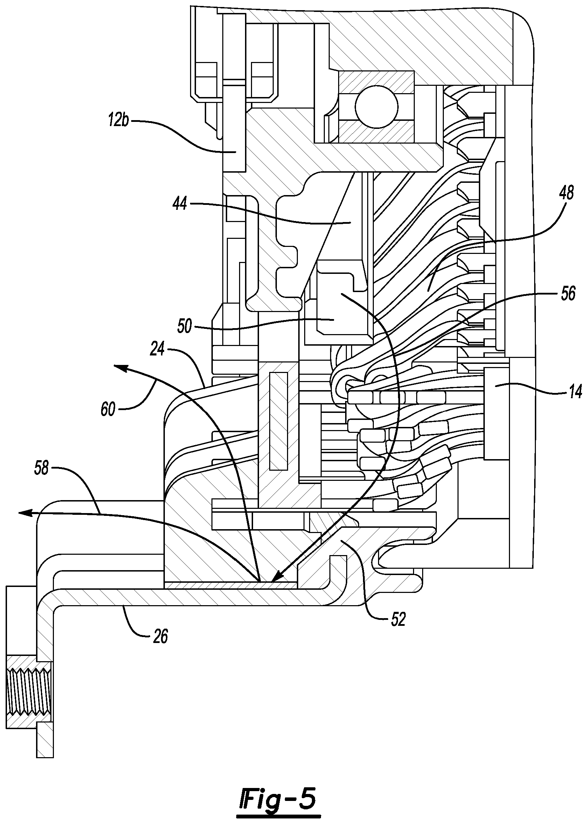

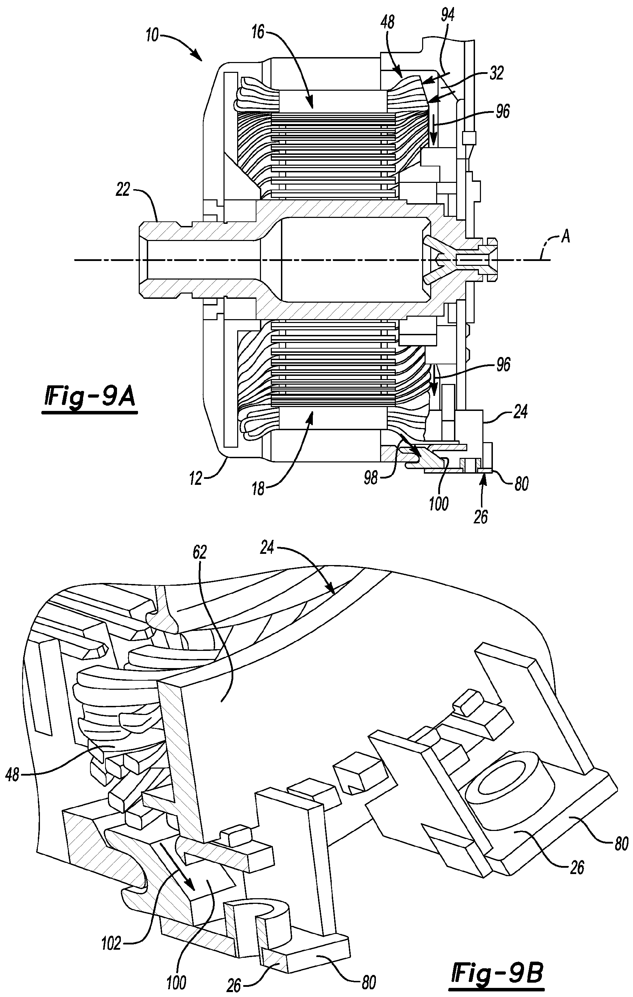

Figures 1-2 show an electric machine 10 that includes a housing 12 defining an internal cavity 14 (Figure 5). In one example, the housing 12 can be provided by one or more housing portions, wherein one of the housing portions comprises a housing cover. The electric machine 10 further includes a stator 16 and a rotor 18 positioned within the internal cavity 14 as shown in Figure 9A In one example, the housing 12 comprises at least a first portion 12a and a second portion 12b that are secured together at a plurality of attachment points 20. As known, the stator 16 and rotor 18 cooperate with each other to provide a driving output 22 that is configured to drive another component, such as a vehicle shaft (not shown) for example.

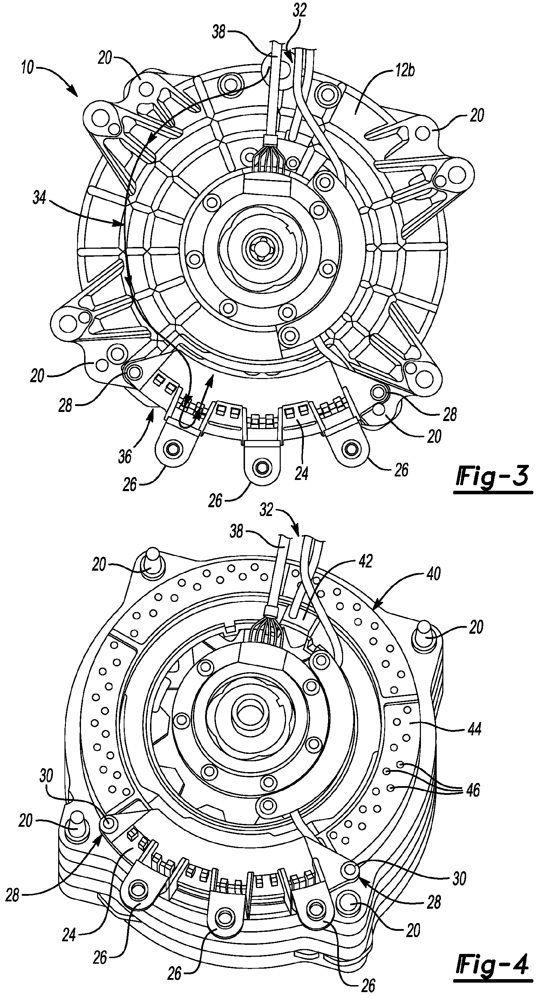

As shown in Figure 3, a high-voltage terminal 24 is supported by the housing 12 and includes one or more busbars 26. In one example, the high-voltage terminal 24 is secured to a one housing portion, i.e. the second portion 12b, via one or more attachment points 28. In the example shown, there are two attachment points 28, one at each end of the high-voltage terminal 24; however, the number of attachment points 28 can vary as needed. In one example, the attachment points 28 comprise fastening attachment points were fasteners are inserted through openings 30 in the high-voltage terminal 24; however, any type of attachment method could be used.

The electric machine 10 is cooled with a fluid that is introduced via a fluid inlet 32. Figure 3 shows one example of a portion of a fluid flow path 34 through the housing 12 where fluid flows from the inlet 32 to a fluid outlet 36 near the high-voltage terminal 24. The fluid is then directed toward the high-voltage terminal 24 and busbars 26, which will be discussed in greater detail below.

In one example, an electrical connector assembly 38 is coupled to the electric machine 10 in a known manner. As known, a control system is used to control operation of the electric machine 10 to provide a desired driving output.

Figure 4 shows a view similar to Figure 3 but with the second housing portion 12b removed. In one example, a distribution member 40 is supported by the housing 12 and has a fluid inlet 42 that receives fluid from the housing fluid inlet 32. In one example, the distribution member 40 comprises a nozzle ring 44, as shown in Figure 4, and which includes one or more guide paths to direct fluid to a fluid outlet 50. Other types of distribution members with one or more guide paths to direct fluid to a fluid outlet 50 could also be used. The fluid is injected in at the inlet 42 and will be distributed through distribution holes 46 of the nozzle ring 44 to windings 48 as shown in Figure 5. The fluid will be guided by way of gravity towards the high-voltage terminal 24 via the outlet 50 from the nozzle ring 44. In one example, the high-voltage terminal 24 is associated with a lowermost portion of the nozzle ring 44 as shown in Figure 4, which allows gravity to facilitate drawing the fluid toward the high-voltage terminal 24. The high-voltage terminal 24 is configured to guide the fluid along surfaces of the high-voltage terminal 24, through guide features such as one or more openings/windows 52, and with inclined surfaces that guide the fluid to the busbars 26 as indicated by arrow 56 in Figure 5. This improves temperature behavior and reduces the temperature of the busbars 26. The fluid then exits the housing 12 via the outlet 36 where the fluid drops into a sump or other component housing as indicated by arrows 58, 60.

In one example, the guides in the high-voltage terminal 24 comprise one or more openings or windows 52 are formed within the high-voltage terminal 24 to direct fluid from the fluid outlet 50 to the plurality of busbars 26. In one example, at least one window 52 is associated with each busbar 26. In one example, more than one window 52 is associated with each busbar 26. In the examples shown, there are three windows 52 associated with each busbar 26.

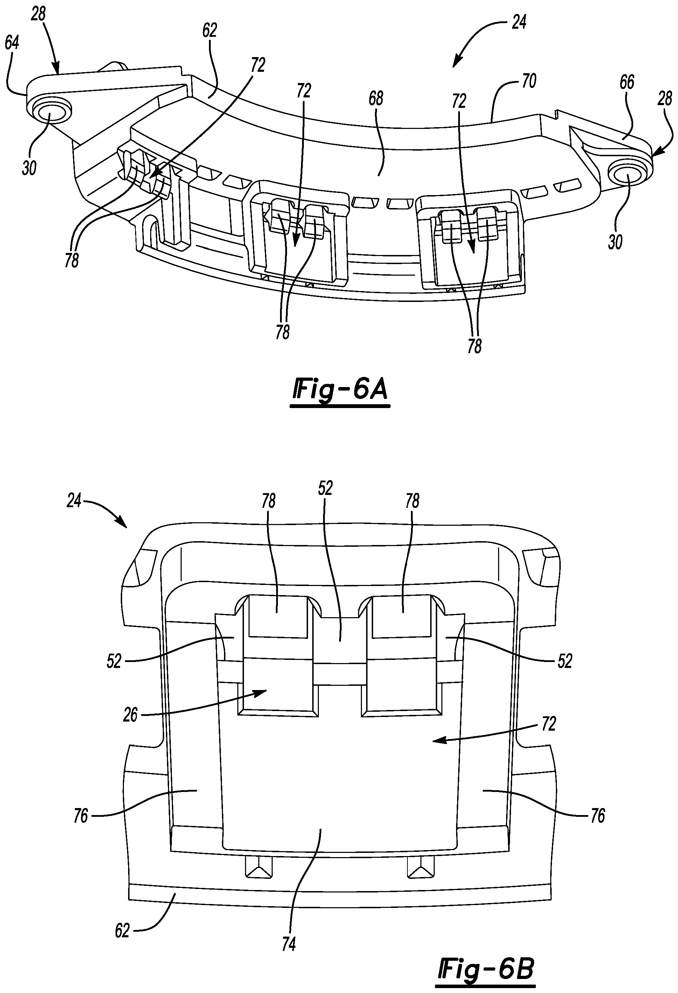

In one example, the high-voltage terminal 24 is attached to the housing 12 adjacent the fluid outlet 50 from the nozzle ring 44 and comprises an arcuate body 62 as shown in Figure 6A. The high-voltage terminal could also be attached to the housing at other locations. The arcuate body 62 extends along an arc-segment between opposing ends 64, 66 that include the attachment points 28 with openings 30 to receive fasteners. The arcuate body 62 has a first side 68 that faces the windings 48 and a second side 70 that faces opposite of the first side 68. The first side 68 includes an attachment area for each of the busbars 26. In one example, the attachment area comprises pocket area 72 that has a bottom surface 74 and walls 76 along edges of the bottom surface 74 as shown in Figure 6B. This forms a collection area for the fluid exiting the nozzle ring 44.

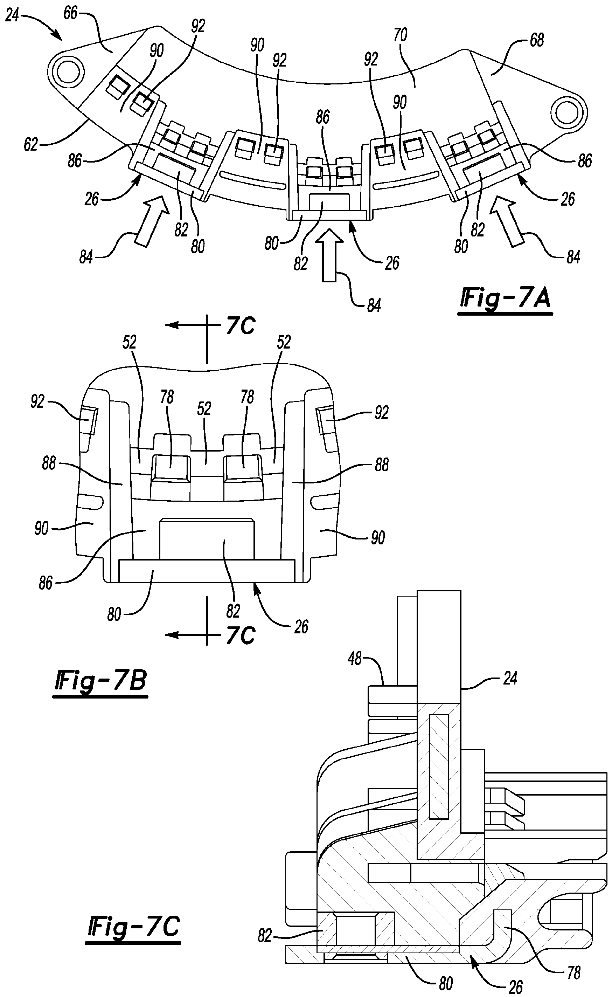

In one example, a first end of the busbar 26 includes one or more tabs 78 that fit through openings in the bottom surface 74 of the pocket area 72. Figures 6A-6B show an example with two tabs 78 that are associated with each pocket area 72. In this example, each pocket area 72 includes three windows 52. One window 52 is between the two tabs 78, and the other two windows are positioned between a wall 76 of the pocket area 72 and a respective one of the tabs 78. The fluid flows between and around the tabs 78, and through the windows 52 to reach a main body of the busbars 26 on the second side 70 of the high-voltage terminal 24 as shown in Figure 7A.

As shown in Figures 7A-7C, one example busbar configuration comprises busbars 26 that have second ends 80 that extend in an axial direction relative to the electric machine 10. In one example, the second ends 80 extend in a direction that is parallel relative to a center axis A defined by the rotor 18 and stator 16 within the housing 12 as best shown in Figure 9A. Each second end 80 of the busbar 26 includes a phase busbar attachment 82. In the example shown, the phase busbar attachment 82 comprises a nut configured to receive a fastener. In this configuration the attaching of the phase busbar attachment 82 to an associated component (not shown) is accomplished by radial fastening as indicated by arrow 84.

In the example shown, the arcuate body 62 includes a recessed area 86 on the second side 70 for the main body of the busbar 26 (see Figure 7B). Each recessed area 86 includes a pair of walls 88 that facilitate support of the busbar 26. In one example, the arcuate body 62 includes areas 90 between the recessed areas 86 that are used for connection interfaces for other components such as a neutral conductor 92, e.g. a copper conductor.

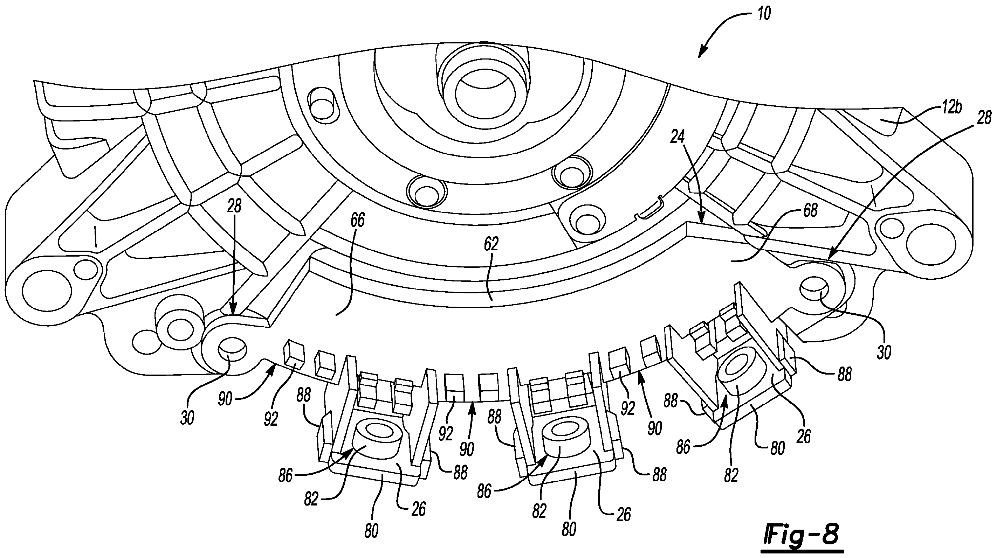

Figure 8 shows the position of the arcuate body 62 as installed on the electric machine 10. Figures 9A-B show a cooling flow path through the electric machine 10. Fluid enters via the fluid inlet 32, as indicated by arrows 94, and then flows through the housing 12 as indicated by arrow 96. The fluid exits the windings 48 and enters the windows 52 of the high-voltage terminal 24 as indicated by arrow 98. In one example, at each window 52, an inclined surface 100 directs fluid onto an associated busbar 26 as shown in Figure 9B. Fluid flows down the inclined surface 100 and onto the busbar 26 as indicated by arrow 102.

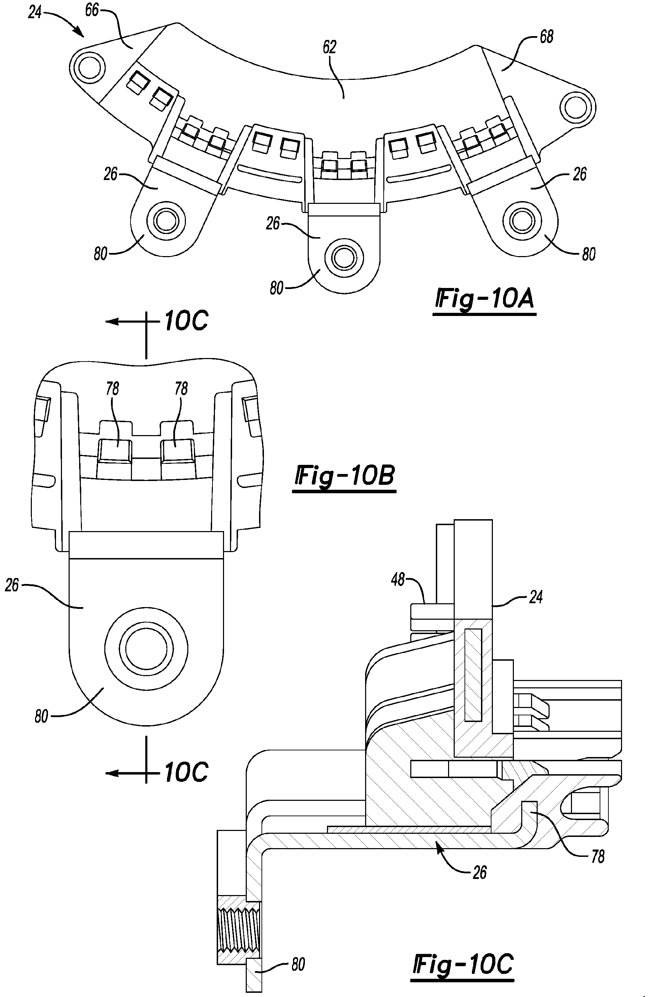

Figures 10A-10C show another example of a busbar configuration. In this example, the high-voltage terminal 24 is the same as that of Figures 7A-7C but the busbars 26 have second ends 80 that extend out radially relative to the center axis A. Attachment of the busbars 26 to other components would occur by fastening in an axial direction. The configuration of Figures 7A-7C has the advantage of the busbars 26 being shorter so that they can be cooled more quickly as the entire busbar 26 can be reached by fluid exiting the windows 52.

In one example, the high-voltage terminal 24 is made from a plastic material. In one example, the busbars are made from a metal material, e.g. copper, and are molded into the high-voltage terminal 24.

The subject disclosure provides a high-voltage terminal with a plastic arcuate body that is modified to absorb a flow of fluid such that the fluid can be supplied to the three phase busbars. A funnel shape and guide channels are incorporated into the plastic body to catch the fluid from the windings and transport the fluid along the guide channels to the phase busbars. It is also possible that the corresponding fluid can flow back through another funnel shape for draining purposes. This promotes fluid transport and optimizes cooling. Thus, the subject disclosure provides for reusing and repurposing fluid already used to cool another portion of the electric machine by using guiding features in the high-voltage terminal. This reduces the temperature of a bolted joint electrical connection without adding additional pumping losses associated with actively cooling the machine.

The preceding description is exemplary rather than limiting in nature. Variations and modifications to the disclosed examples may become apparent to those skilled in the art that do not necessarily depart from the essence of this disclosure. Thus, the scope of protection given to this disclosure can only be determined by studying the following claims.

## Claims

1. An electric machine comprising:
a housing or housing cover;
a distribution member supported by the housing or housing cover, the distribution member having a fluid inlet and a fluid outlet;
a high-voltage terminal supported by the housing or housing cover;
one or more busbars associated with the high-voltage terminal; and
one or more guides formed within the high-voltage terminal to direct fluid from the fluid outlet to the one or more busbars.

2. The electric machine of claim 1, wherein the one or more busbars comprises a plurality of busbars, and the one or more guides comprises a plurality of windows, optionally wherein each busbar is associated with one or more windows of the plurality of windows.

3. The electric machine of claim 2, wherein the high-voltage terminal includes a discrete mounting pocket for each busbar.

4. The electric machine of any preceding claim, wherein the high-voltage terminal is comprised of a plastic material and the one or more busbars are comprised of a metal material.

5. The electric machine of any preceding claim, wherein:
the housing or housing cover defines an internal cavity;
a stator and a rotor are positioned within the internal cavity;
fluid flows from the fluid inlet to the fluid to cool windings associated with the stator and the rotor;
a plurality of busbars are associated with the high-voltage terminal; and
the plurality of guides formed within the high-voltage terminal direct fluid from the fluid outlet to the plurality of busbars.

6. The electric machine of claim 5, wherein the plurality of guides comprises at least one window that is associated with each busbar.

7. The electric machine of claim 5 or 6, wherein the plurality of guides comprises more than one window that is associated with each busbar.

8. The electric machine of any preceding claim, wherein each guide comprises an inclined surface that directs fluid onto an associated busbar.

9. The electric machine of any preceding claim, wherein the distribution member comprises one or more guide paths to direct fluid to the fluid outlet.

10. The electric machine of any preceding claim, wherein the high-voltage terminal comprises an arcuate body that is associated with a lowermost portion of the distribution member.

11. The electric machine of any preceding claim, wherein each busbar has a first end fixed to the high-voltage terminal and a second end that comprises a phase busbar attachment.

12. The electric machine of claim 11, wherein each second end extends out radially relative to a center axis defined by the rotor.

13. The electric machine of claim 11, wherein each second end extends in a direction that is parallel relative to a center axis defined by the rotor.

14. A method comprising:
distributing a fluid through an electric machine housing or housing cover from a fluid inlet to a fluid outlet;
directing fluid exiting the fluid outlet toward a high-voltage terminal supported by the electric machine housing; and
guiding the fluid through the high-voltage terminal to cool one or more busbars associated with the high-voltage terminal.

15. The method of claim 14, including forming one or more windows in the high-voltage terminal to direct fluid from the fluid outlet to the one or more busbars, optionally including associating at least one window with each busbar and directing fluid through each window to cool an associated busbar.
